# EUROPEAN PATENT SPECIFICATION

(11) **EP 3 826 470 B1**
(45) Date of publication and mention of the grant of the patent: **04.03.2026**
(21) Application number: 19840373.5
(22) Date of filing: 26.07.2019
(51) Int. Cl.: A23G 4/06, A23G 4/20, A23G 4/02, A23G 4/08, A23G 4/12, A23G 4/18

(54) **A METHOD OF PRODUCING A CHEWING GUM PRODUCT**
VERFAHREN ZUR HERSTELLUNG EINES KAUGUMMIPRODUKTS
PROCÉDÉ DE FABRICATION D'UN PRODUIT DE GOMME À MÂCHER

(30) Priority: 26.07.2018 US 201862703531 P
(43) Date of publication of application: 02.06.2021
(73) Proprietor: Wm. Wrigley Jr. Company, Chicago, IL 60642 (US)
(72) Inventor: PHILLIPS, David R., Chicago, Illinois 60642 (US); LIU, Jingping, Chicago, Illinois 60642 (US); BRODERICK, Kevin, Chicago, Illinois 60642 (US)
(74) Representative: Haseltine Lake Kempner LLP
(86) International application number: PCT/US2019/043565
(87) International publication number: WO 2020/023821

(56) References cited:
- EP-B1- 2 548 452
- WO-A1-2008/067207
- WO-A2-2007/030011
- JP-A- 2007 143 458
- US-A- 3 857 965
- US-A- 3 973 041
- US-A- 4 252 794
- US-A- 4 388 328
- US-A- 5 223 282
- US-A1- 2016 100 606

## Description

### BACKGROUND OF THE INVENTION

The present invention relates to chewing gums, which are formed by molding the product in a molten state. In some embodiments, the mold is part of the product packaging.

Chewing gums have been enjoyed by consumers for over a century because they provide flavor and refreshment over an extended time period and satisfy a human urge to chew. A number of forms of chewing gum have been marketed, but the most popular are sticks, tabs and coated pellets. These forms have the advantage of being easily produced in commercial quantities using highspeed forming equipment. However, they can only produce products with limited variations in shape. They cannot produce complex, three dimensional shapes or shapes with high-definition, for example, of animals, faces, cartoon characters, fruits or other objects.

Consumers are constantly looking for new confectionery experiences. Products having three dimensional shapes are attractive and offer opportunities to manufacture products relevant to seasonal or special events. There have been past attempts to mold chewing gums into three dimensional shapes, but such efforts are not known to have ever resulted in commercially successful products.

One problem with molten gum processing is the high viscosity of chewing gum which requires that the product be heated to very high temperatures (typically over 90°C) in order to lower its viscosity sufficiently to allow it to be pumped through the depositing apparatus. This increases the risks for deterioration or volatilization of sensitive ingredients. It also increases the time required to cool the deposited composition for further processing such as moving the deposited product and may, as a practical matter, require refrigeration equipment or other means to more rapidly cool the deposited gum. On laboratory or pilot scale, the problem of melting the chewing gum may be manageable but commercial production is difficult.

Furthermore, past efforts to produce molten confectionery product formulations in large scale have produced inconsistent results. This is believed to be due to the material being strongly affected by its heat history, with even minor, uncontrolled changes in processing conditions leading to large variations in critical properties such as melting point.

A novel consumer product could be prepared by depositing molten confectionery material onto a preformed sheet of packaging film which would act as a mold to shape the deposited piece. This could be done as a 'so-called' blister pack in which a sheet including one or more blister molds is covered with a lidding material (for example, a foil or a foil laminate) and then further packaged. However, the sheet materials commonly used for blister packages have maximum fill temperatures in the range of 65 to 120°C and thus many are likely to be deformed if a molten material is deposited directly into a blister mold. While some food-approved sheet materials may tolerate sufficiently high melting deposit temperatures, they may lack the clarity, moldability, and barrier properties of lower melting materials. They may also be significantly more expensive. For this reason, it would be desirable to deposit the molten material at a temperature below 100°C or even below 90°C, below 85°C, below 80°C, below 75°C, or below 70°C.

Attempts to reformulate confectionery products to optimize low temperature depositing, for example by the addition of syrups and/or increased water content, are likely to lead to products which lack the proper texture or which have shelf stability or other problems. It also may contribute to product variability since the amount of water present will decrease the longer the composition is held at elevated temperature.

Accordingly, there is a need for a method of making high quality deposited and molded confectionery products with flexible formulation options.
WO2008/067207A1 and EP2548452B1 relate to chewing gum compositions comprising a saccharide component and an elastomeric component. US2016/100606A1 relates to chewing gum compositions comprising a gum base and a sugar alcohol bulk sweetener, also including a plurality of hard, amorphous inclusions distributed throughout the chewing gum.

JP 2007 143458 A discloses a method for producing a chewing gum characterized by filling a mold with a chewing gum dough containing a saccharide, a gum base and a seed agent, molding, cooling and solidifying, and peeling.

### SUMMARY OF THE INVENTION

The present invention is defined in the appended claims.

The
present invention provides a method of producing a chewing gum product comprising the steps of;
a. melting a blend of at least two sugar alcohols at a temperature sufficient to ensure complete melting of the sugar alcohols to form molten sugar alcohols, wherein the sugar alcohols comprise
   i) a blend of sorbitol and xylitol, or
   ii) a blend of erythritol and xylitol or
   iii) a blend of erythritol and sorbitol in a ratio within the range of 1:2 to 1:6 of erythritol to sorbitol, or
   iv) a blend of sorbitol, xylitol and isomalt, or
   v) a blend of sorbitol, xylitol and erythritol, or
   vi) a blend of isomalt, xylitol and erythritol, and
b. melting a gum base into the molten sugar alcohols to form a molten blend,
c. adding additional chewing gum ingredients to the molten blend, the additional chewing gum ingredients comprising at least a flavor,
d. cooling the molten blend to a lower temperature and maintaining the blend at the selected lower temperature, wherein the blend remains as a molten, pumpable mixture at the selected lower temperature, and
e. forming the molten chewing gum into a desired shape,
wherein steps c. through d. are performed in any order, and wherein the molten sugar alcohols are in completely liquid form.

In an embodiment the present invention provides a method of producing a confectionery product comprising the steps of;
a. melting at least two sugar alcohols at a temperature sufficient to ensure complete melting, wherein the sugar alcohols comprise
   i) a blend of sorbitol and xylitol, or
   ii) a blend of erythritol and xylitol or
   iii) a blend of erythritol and sorbitol in a ratio within the range of 1:2 to 1:6 of erythritol to sorbitol, or
   iv) a blend of sorbitol, xylitol and isomalt, or
   v) a blend of sorbitol, xylitol and erythritol, or
   vi) a blend of isomalt, xylitol and erythritol.
b. cooling the melted at least two sugar alcohols,
c. mixing a gum base and additional chewing gum ingredients comprising at least a flavor with the at least two sugar alcohols to form a mixture,
d. heating the mixture to form a molten chewing gum composition at a temperature whereat the molten chewing gum composition is pumpable and depositable, and
e. forming a chewing gum product by depositing the molten chewing gum composition onto a surface, for example, into a mold to make a molded chewing gum piece.

In some embodiments, the molten sugar alcohol will be cooled by the addition of solid (i.e. unmelted) gum base at a temperature below that of the molten sugar alcohol.

In some embodiments, the molten sugar alcohol composition will contain a small amount of water, such as less than 4% or less than 3% or less than 2% or less than 1% or less than 0.5% by weight of the molten sugar alcohol composition.

In some embodiments, the chewing gum base is melted into the molten sugar alcohol at a temperature between 70°C and 110°C, between 80°C and 100°C, or between 85°C and 95°C.

In some embodiments, additional ingredients comprising at least a flavor are added after the molten sugar alcohol has been cooled.

In some embodiments, there is no crystalline sugar alcohol in the completely melted at least one sugar alcohol. In some embodiments there remains less than 1%, less than 2%, less than 3%, less than 5%, or less than 10% crystalline sugar alcohol by weight in the completely melted at least one sugar alcohol.

The sugar alcohol will comprise a blend of two sugar alcohols, or at least two sugar alcohols.

In some embodiments, the sugar alcohol will comprise a blend of three sugar alcohols, or at least three sugar alcohols.

In some embodiments, the sugar alcohol will comprise a blend of four sugar alcohols, or at least four sugar alcohols.

In some embodiments, the sugar alcohol will comprise a blend of five sugar alcohols, or at least five sugar alcohols.

In some embodiments, the at least two sugar alcohols are heated to a temperature of at least 70°C, or at least 80°C, or at least 90°C, or at least 100°C, or at least 110°C, or at least 120°C, or at least 130°C, or at least 140°C, or at least 150°C, or at least 160°C, or at least 170°C, or at least 180°C or at least 190°C to melt the sugar alcohol blend.

In some embodiments, the molten blend is deposited at a temperature less than 120°C, or less than 95°C, or less than 90°C, or less than 85°C, or less than 80°C or less than 75°C, or less than 70°C.

In some embodiments, the molten material is deposited on a conveyor which may be moving or stationary during the depositing. In some embodiments, the molten material is deposited into a mold. In some embodiments, the mold is part of the consumer packaging. In some embodiments, the mold is a blister formed in a food packaging film which is then optionally covered with a lidding material and further packaged for retail sale.

In some embodiments, the additional ingredients comprise flavor and at least one ingredient selected from the group consisting of high intensity sweeteners, encapsulated high intensity sweeteners, colors, emulsifiers, softeners, humectants, fillers, and nutritional supplements, and visual effects.

In some embodiments, the molten sugar alcohol is cooled, for example to ambient conditions, and stored for later use. At the storage temperature, the stored sugar alcohol may be in the form of a viscous liquid or a solid which may be pliable or brittle. The sugar alcohol may change form over time when stored at ambient conditions, but will remain usable. Depending on the form and the specifics of the manufacturing operation, the stored sugar alcohol may be ground, pelletized, remelted or added as a mass to the manufacturing operation. The confectionery product may be manufactured in an extruder or a stirred tank or in a blender or batch mixer, such as a sigma blade mixer. In some embodiments, during or after mixing (depending on the specifics of the operation) the material will be completely melted and then deposited onto a surface as described elsewhere.

Herein disclosed as not part of the present invention are products made by any of the above processes, as well as non-chewing gum confectionery products (such as a chewy candy, soft candy, or hard candy) and methods, for which the appropriate ingredients for the desired confectionery product replace the ingredients specific to chewing gum referenced herein (e.g., gum base).

### BRIEF DESCRIPTION OF THE DRAWINGS

FIGURE 1 is a graph of complex viscosity vs. temperature for an inventive product (Example 1) and a conventional chewing gum product (Example 5).
FIGURE 2 is a photograph of gum pellets of the conventional process heated to 85 °C.
FIGURE 3 is a photograph of gum pellets of the inventive process heated to 85 °C.
FIGURE 4 is a schematic of the temperature program of the inventive process.
FIGURE 5 is a graph of complex viscosity vs. shear rate for Example 2 at various stages of production.
FIGURE 6 is a graph of complex viscosity vs. temperature for Example 2 at various stages of production.
FIGURE 7 is a graph of complex viscosity vs. temperature for Examples 6, 7, 8, and 9.

### DESCRIPTION OF THE INVENTION

Embodiments of the present invention are based on the discovery that sugar alcohols and particularly blends of two or more sugar alcohols can be melted together at a temperature typically near or above the melting point of the highest melting sugar alcohol in the blend and subsequently cooled and mixed with chewing gum base and other chewing gum ingredients to form a chewing gum product. It has been surprisingly found that by pre-melting one or a blend of two or more sugar alcohols (also known as polyols or alditols), a chewing gum composition may be pumped and deposited at relatively low temperatures compared with other methods in which at least the gum base is melted simultaneously with one or more sugar alcohols. This chewing gum composition may be held at relatively low temperatures and then deposited onto a surface, for example, into a mold to make a molded chewing gum piece.

It is believed that previous efforts in which the sugar alcohols and gum base were melted together resulted in less than complete melting of the sugar alcohols due to limits on how hot the composition could be heated and maintained at a commercial scale without damaging the gum base. Although the composition might appear and behave as fully molten, this less than complete melting of the sugar alcohols increases the viscosity of the (mostly) molten mixture thus requiring higher processing temperatures. This is especially true when higher melting sugar alcohols such as isomalt, maltitol, mannitol and erythritol are used.

However, if the sugar alcohols are completely pre-melted by mixing them at a sufficient temperature for a sufficient time, the molten composition can be cooled significantly yet remain in a fully molten state. When two or more sugar alcohols are blended together, they are resistant to recrystallization even if the composition is allowed to cool to a solid mass. As a result, the blend can be maintained at a relatively low holding temperature or even re-melted without resorting to temperatures which might damage other ingredients or packaging materials used as molds for the deposited compositions.

By "completely melted" or "completely molten," it is meant that the sugar alcohol(s) are in a completely liquid form or nearly so. For example, it is desirable that the sugar alcohol(s) be at least 99.5% amorphous (i.e. lacking crystalline form) or at least 99% amorphous, or at least 98% amorphous, or at least 97% amorphous or at least 96% amorphous.

The sugar alcohol blend preferably contains the minimum amount of water possible, such as less than 0.5%. This is desirable since it minimizes any variation in the product cause by water evaporating from the molten sugar alcohol or molten chewing gum. Low moisture chewing gums generally have better shelf life attributes as well. In some embodiments, the water content is less than 1% or less than 2% or less than 3% or less than 4% (by weight). In some cases, small amounts of water may be added to reduce the heat necessary to initially melt the sugar alcohol(s) and some or all of it later evaporated off by the high temperatures in the process.

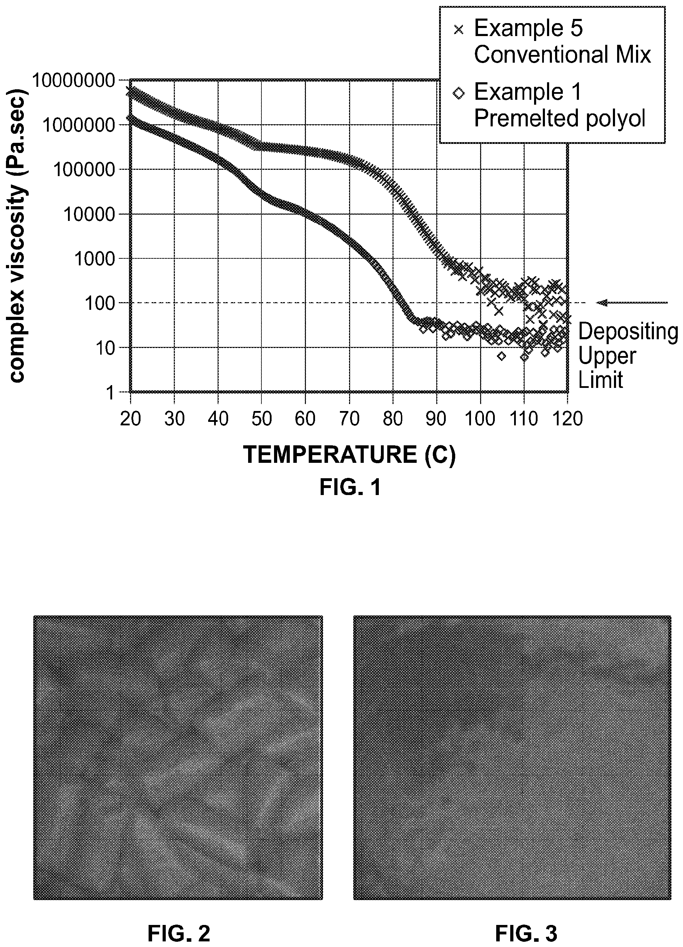

In order for a chewing gum composition to be depositable, that is, able to conform to shapes with fine definition and detail, it should have a complex viscosity of less than about 100 Pa.sec. and preferably no greater than about 90 Pa.sec., such as less than 80, or less than 50, or less than 30 Pa.sec. As shown in Figure 1, a molten chewing gum composition made by the method of the present invention and comprising a sugar alcohol blend of 15% sorbitol, 40% xylitol and 45% Isomalt is depositable at temperatures as low as about 82°C. For comparison, a chewing gum composition having the same formulation but made by melting the gum base and the sugar alcohols simultaneously is not depositable below 100°C and is only marginal at temperatures as high as 120°C. For comparison, Figure 2 shows gum pellets of this simultaneous melting method heated to 85°C and Figure 3 shows gum pellets of the present pre-melted sugar alcohol blend invention heated to the same temperature.

Due to the lower processing temperatures of the present method, and due to the freedom to select a sugar alcohol composition without regard to the melting points of the individual components, high quality molding of the chewing gum compositions is possible. Lower viscosity of the deposited gum allows it to conform to intricate details in a mold, such as the seeds in a strawberry mold. The low temperature prevents softening and melting of the blister film which could distort the mold and the product.

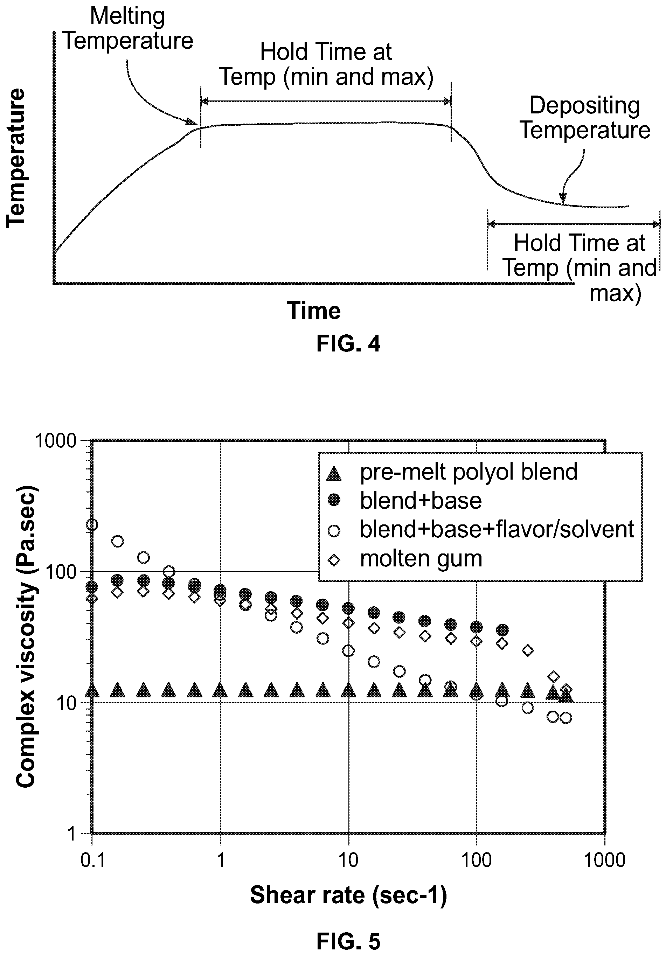

To ensure complete melting, the sugar alcohol can be heated to at least the temperature of the highest melting sugar alcohol in the blend in order to melt the blend. However, in many cases where a blend of sugar alcohols are used, it will not be necessary to heat the blend that high. As shown in Figure 4, once the selected temperature is reached, the sugar alcohol is held at that temperature for a time sufficient to render it a clear, transparent liquid. It may be desirable to hold the composition at that temperature for a few more minutes, such as at least 5 minutes or at least 10 minutes or at least 15 minutes, to ensure that no microscopic crystalline domains remain in the molten sugar alcohol composition.

Whether a sugar alcohol composition is completely melted can be determined by visual inspection of the melted sugar alcohol. Completely melted sugar alcohol will appear transparent, translucent or clear. It may be desirable to continue heating the composition after this state is reached, in order to ensure that complete melting has occurred. As a practical matter, a small amount of crystalline material may remain such as such as less than 1% or less than 2% or less than 3% or less than 5% or less than 10% (by weight).

By molten chewing gum composition or blend, it is meant that the complete chewing gum with all ingredients added is at a temperature that renders it a flowable liquid having a complex viscosity of less than 120 Pa.sec., preferably less than 100 Pa.sec., and more preferably less than 80 Pa.sec.

The present invention is practiced using blends of at least two sugar alcohols. As at least two sugar alcohols are used, recrystallization is delayed thus allowing lower holding/depositing temperatures and longer hold times at those temperatures. Preferred combinations of sugar alcohols include blends of xylitol and erythritol, and xylitol and sorbitol. Isomalt may optionally be added to either of these combinations. It should be noted that isomalt is actually a blend of two different sugar alcohols. Maltitol and mannitol are also usable in the present invention. In some preferred embodiments, the sum of erythritol and mannitol does not exceed 26% by weight of the sugar alcohol blend, while isomalt is at least 32%. In some embodiments, the sum of erythritol and mannitol does not exceed 20% by weight of the sugar alcohol blend while isomalt and/or maltitol is at least 40%. In some embodiments, the sum of erythritol and mannitol does not exceed 4% by weight of the sugar alcohol blend.

In some embodiments, the sugar alcohol will comprise a blend of erythritol and xylitol - for example, in an erythritol to xylitol (weight) ratio in the range of 1:1 to 1.6, 1:1 to 1.5, 1:1 to 1:2, 1:2 to 1:6, 1:2 to 1:5, 1:2 to 1:3, or 1:3 to 1:4). In some embodiments, the sugar alcohol will comprise a blend of erythritol and sorbitol - for example, in an erythritol to sorbitol ratio in the range of 1:1 to 1.6, 1:1 to 1.5, 1:1 to 1:2, 1:2 to 1:6, 1:2 to 1:5, 1:2 to 1:3, or 1:3 to 1:4. In some embodiments, the sugar alcohol will comprise a blend of xylitol and sorbitol - for example, in a xylitol to sorbitol ratio in the range of 1:1 to 1.6, 1:1 to 1.5, 1:1 to 1:2, 1:2 to 1:6, 1:2 to 1:5, 1:2 to 1:3, or 1:3 to 1:4. In some embodiments, the sugar alcohol will comprise a blend of sorbitol, xylitol and isomalt - for example, in a sorbitol to xylitol to isomalt ratio in the range of (0.1 to 0.3):(0.1 to 0.7):(0.1 to 0.7), In certain embodiments, the sorbitol to xylitol to isomalt ratio is 0.1:0.7:0.2, 0.1:0.5:0.4, 0.2:0.3:0.5, 0.2:0.4:0.5, 0.1:0.3:0.6, 0.2:0.2:0.6, or 0.3:0.2:0.6. In some embodiments, the sugar alcohol will comprise a blend of erythritol, xylitol and sorbitol - for example, in an erythritol to xylitol to sorbitol ratio in the range of (0.1 to 1.5):(0.1 to 1.5):(0.1 to 1:5). In certain embodiments, the erythritol to xylitol to sorbitol ratio is 0.2:0.3:0.5, 0.5:0.3:0.2, or 1:1:1. In some embodiments, the sugar alcohol will comprise a blend of erythritol, maltitol, and sorbitol - for example, in an erythritol to maltitol to sorbitol ratio in the range of (0.1 to 1.5):(0.05 to 1.5):(0.1 to 1.5). In certain embodiments, the erythritol to maltitol to sorbitol ratio is 0.2:0.1:0.7, 0.2:0.1:0.6, or 1:1:1. Other exemplary embodiments include: 1:6 of isomalt to xylitol, 1:3.5 ratio of erythritol to sorbitol, 1:4 ratio of mannitol to xylitol, 1:1.3 ratio of arabitol/xylitol, 1:1.9 of erythritol to arabitol, and 1:2.9 of erythritol to adonitol.

Examples of sugar alcohols useable in the present invention and their melting points (taken from "Ingredients Handbook Sweeteners 3rd edition" and Xylitol J.N. Counsell) are shown in Table 1.

| **Table 1** | |
|---|---|
| **Sugar Alcohol** | **Typical/main Melting Point °C** |
| Sorbitol | 93 - 97 |
| Xylitol | 93 - 94.5 |
| Isomalt | 145 - 150 |
| Maltitol | 148 - 152 |
| Mannitol | 165 - 169 |
| Erythritol | 122 |
| Adonitol | 102 - 105 |
| Arabitol | 103 |

The inventive process may be carried out as a continuous operation, for example by using a mixing extruder. For example, one or more sugar alcohols can be introduced into the first zone of an extruder set to a high temperature to melt the sugar alcohols. The second zone can be set to cool the composition while base and other chewing gum ingredients are added. After mixing, the composition is discharged at or near the depositing temperature and transferred to the depositing system.

The fundamental components of a chewing gum typically are a water-insoluble gum base portion and a water-soluble bulking agent portion. The primary component of the gum base is typically an elastomeric polymer which provides the characteristic chewy texture of the product. The gum base will typically include other ingredients which modify the chewing properties or aid in processing the product. These include plasticizers, softeners, fillers, emulsifiers, plastic resins, as well as colorants and antioxidants. The water soluble portion of the chewing gum typically includes a bulking agent together with minor amounts of secondary components such as flavors, high-intensity sweeteners, colorants, water-soluble softeners, gum emulsifiers, humectants, acidulants and sensates. Typically, the water-soluble portion, sensates, and flavors dissipate during chewing and the gum base is retained in the mouth throughout the chew.

Chewing gums normally comprise a water insoluble gum base portion and a water soluble portion which includes sweeteners, flavors and other ingredients. Any chewing gum base and chewing gum formula may be used in the methods of the present invention.

The water insoluble gum base typically may contain any combination of elastomers, vinyl polymers, elastomer plasticizers, fillers, softeners, waxes and other optional ingredients such as colorants and antioxidants. The variety of gum base ingredients typically used provide the ability to modify the chewing characteristics of gums made from the gum base.

Elastomers provide the rubbery, cohesive nature to the gum which varies depending on this ingredient's chemical structure and how it may be compounded with other ingredients. Natural elastomers may include natural rubber such as smoked or liquid latex and guayule, natural gums such as jelutong, lechi caspi perillo, massaranduba balata, massaranduba chocolate, nispero, rosidinha, chicle, gutta percha, gutta kataiu, niger gutta, tenu, chilte, chiquibul, gutta hang kang. Synthetic elastomers may include high molecular weight elastomers such as butadiene-styrene copolymers and isobutylene-isoprene copolymers. Other polymers which sometimes serve as elastomers include polybutadiene and polyisobutylene, vinyl polymers such as polyvinyl acetate, polyethylene, vinyl copolymeric elastomers such as vinyl acetate/vinyl laurate, vinyl acetate/vinyl stearate, ethylene/vinyl acetate, polyvinyl alcohol or mixtures thereof. These polymers perform best when used in combination with butadiene-styrene copolymers and isobutylene-isoprene copolymers.

Vinyl polymeric and copolymeric type elastomers provide tack resistance, vary the chew characteristics of gums made from these bases and offer hydrophilic properties beneficial to sensory perception of the final gums. For copolymeric types, the amount of vinyl laurate, vinyl stearate, or ethylene present in the vinyl laurate/vinyl acetate (VLNA), vinyl stearate/vinyl acetate (VSNA), or ethylene/vinyl acetate (EVA) copolymers respectively typically ranges from about 10 to about 60 percent by weight of the copolymer. Average molecular weights of these polymers may range from about 2,000 to about 80,000. Ball and ring softening points of these polymers may range from about to 50 to 120°C. Polyvinyl acetate having an average molecular weight from about 8,000 to about 52,000 are preferred for use in the gum base and gum of the present invention. More preferred for chewing gum bases are those of from about 10,000 to about 35,000 molecular weight, and for bubble gum bases, those having from about 30,000 to about 60,000 molecular weight. Vinyl polymers typically release flavor quickly, and using iso-alkanic waxes exhibiting small crystalline structure with these vinyl polymers extends flavor release.

Petroleum waxes aid in the curing of the finished gum made from the gum base as well as improve shelf-life and texture. Wax crystal size when hard also improves the release of flavor. Those waxes high in iso-alkanes have a smaller crystal size than those waxes high in normal-alkanes, especially those with normal-alkanes of carbon numbers less than 30. The smaller crystal size allows slower release of flavor since there is more hindrance of the flavor's escape from this wax versus a wax having larger crystal sizes.

Synthetic waxes are produced by means atypical of petroleum wax production and may include waxes containing branched alkanes and copolymerized with monomers such as, but not limited to, propylene and polyethylene and Fischer-Tropsch type waxes. Polyethylene wax is not in the same category as polyethylene, a polymer of ethylene monomers.

Elastomer solvents (sometimes called elastomer plasticizers) vary the firmness of the gum base. Their specificity on elastomer inter-molecular chain breaking (plasticizing) along with their varying softening points cause varying degrees of finished gum firmness when used in base. This is also important when one wishes to provide more elastomeric chain exposure to the alkanic chains of the waxes. Elastomer solvents include natural rosin esters such as glycerol ester of partially hydrogenated rosin, glycerol ester of polymerized rosin, glycerol ester of partially dimerized rosin, glycerol ester of rosin, glycerol ester of tall oil rosin, pentaerythritol esters of partially hydrogenated rosin, partially hydrogenated methyl esters of rosin, pentaerythritol ester of rosin, synthetic elastomer plasticizers such as terpene resins derived from alpha- pinene, beta-pinene and/or d-limonene, and mixtures thereof. The elastomer solvents used may be of one type or of combinations of more than one. Typically, the ratios of one to the other are dependent on each respective softening point, on each effect on flavor release, and on each respective degree of tack they cause to the gum. Ball and ring softening points of the rosin ester types described above may range from about 60 to about 120°C. Softening points of the terpene resins may range from about 60 to about 130°C and an average molecular weight of from about 500 to 2,000. Occasionally, both terpene and rosin ester resins may be used together.

Softeners modify the texture, cause the hydrophobic and hydrophilic components of the base to be miscible, and may further plasticize the synthetic elastomers of the gum base. Softeners include fully hydrogenated oils of cottonseed, soybean, palm, palm kernel, coconut, safflower and the like, as well as monoglycerides, diglycerides, acetylated monoglycerides, distilled mono- and diglycerides and de-oiled or "powdered" lecithin. The glycerides and lecithin are sometimes referred to as emulsifiers.

Fillers used in gum base modify the texture of the gum base and aid in processing. Fillers include carbonate or precipitated carbonated types such as magnesium and calcium carbonate, ground limestone and silicate types such as magnesium and aluminum silicate, clay, alumina, talc, as well as titanium oxide, mono- di- and tricalcium phosphate, cellulose polymers such as ethyl, methyl and wood or mixtures thereof.

Other optional ingredients such as antioxidants and colorants may also be used in the gum base. Antioxidants prolong shelf-life and storage of gum base, finished gum or their respective components including fats and flavor oils. Antioxidants suitable for use in gum base or gum of the present invention include butylated hydroxyanisole (BHA), butylated hydroxytoluene (BHT), beta - carotenes, tocopherols, acidulants such as Vitamin C, propyl gallate, other synthetic and natural types or mixtures thereof in free-flowing ground or pulverized form.

The soluble portion of chewing gums is composed of flavoring agents (including sensates such as physiological cooling agents, warming agents and tingling agents), bulking agents (also called bulk sweeteners), encapsulated and unencapsulated high intensity sweeteners, colors, acidulants, fillers, emulsifiers, softeners (such as acetylated monoglycerides and triacetin) water soluble softening agents, humectants (such as glycerin), binders, nutritional supplements and visual effects. Visual effects include additives that vary the appearance of the product such as speckles, beads, fruit or other vegetable pieces, glitter, pearlescent particles and the like.

High-intensity artificial sweeteners can also be used, alone or in combination, with the above. Preferred sweeteners include, but are not limited to, sucralose, aspartame, N-substituted APM derivatives such as neotame, salts of acesulfame, alitame, saccharin and its salts, cyclamic acid and its salts, glycyrrhizin, dihydrochalcones, thaumatin, monellin, stevia and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

A variety of flavoring agents can also be used, if desired. The flavor can be used in amounts of about 0.1 to about 15 weight percent of the gum, and preferably, about 0.2% to about 5% by weight. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion. Included in the general category of flavors are sensates, chemicals which impart physiological sensations in the mouth such as cooling agents, warming agents and tingling agents. Examples of cooling agents include menthol, WS-23, WS-3, WS-5, isopulegol, esters of menthol such as menthyl succinate, menthyl lactate and menthyl glutarate, among others. Warming and tingling agents include capsaicin, piperine, jambu and spilanthol.

In some cases, the flavor may be encapsulated, spray dried or otherwise combined with another material to control its release (faster or slower) and/or protect the flavor from degradation or volatilization due to heat or reactive chemicals in the process.

Chewing gum formulas used in the present invention are preferably low moisture, such as containing less than 4% or less than 3% or less than 2% or less than 1% or less than 0.5% water by weight of the chewing gum composition. That includes water for syrups, water normally present in the ingredients and any water added directly to the mixing apparatus.

### EXAMPLES

### Example 1

A molten chewing gum was manufactured by mixing the ingredients according to the listed times and temperatures in Table 2. The mixing was performed in a small sigma blade mixer electrically heated with cooling provided by compressed air.

| **Table 2** | | | |
|---|---|---|---|
| **Temp** | **Elapse Time** | **Ingredient** | **Ex. 1 %** |
| **140°C** | 0-6 min | Sorbitol | 9.920 |
| | | Xylitol | 26.460 |
| | | Isomalt | 29.760 |
| **85°C** | 6-16 min | **Cool down** | |
| **85°C** | 16-21 min | Gum Base | 29.000 |
| | 21-25 min | Strawberry Flavor | 2.000 |
| | | Softener | 0.800 |
| | 25-28 | High Intensity Sweeteners | 1.200 |
| | | Food acids | 0.800 |
| | | Color | 0.060 |
| | | **Total** | **100.000** |

After mixing, the chewing gum was melt extruded according to Table 4. The molten product was discharged and visually inspected and appeared to be a well incorporated mixture and within the depositing viscosity range.

### Example 2

A second molten chewing gum was manufactured by the inventive process according to the same formula as Example 1, but on a larger scale. The mixing was performed in a stirred tank first heated by oil and then cooled by the ingoing base and switched to water heating. The method is outlined in Table 3.

| **Table 3** | | | |
|---|---|---|---|
| **Temp** | **Elapse Time** | **Ingredient** | **%** |
| 140°C | 0 - 84 min | Sorbitol | 9.920 |
| | | Xylitol | 26.460 |
| | | Isomalt | 29.760 |
| At 84 minutes the sugar alcohols were completely melted into a translucent homogeneous liquid state with an internal temperature of 144°C | | | |
| Cool Down - Switch over from oil heating to glycol heat system set at 90°C | | | |
| Added base once temperature reduced to 110°C | | | |
| 110°C | 107 min | Base | 29.000 |

| Base fully incorporated at 12 min | | | |
|---|---|---|---|
| 84°C | 119 min | Strawberry Flavor | 2.000 |
| | | Acetylated Monoglyceride | 0.800 |
| | | Color | 0.060 |
| 85°C | 132 min | Food Acids | 0.800 |
| | | High Intensity Sweeteners | 1.200 |
| **87°C** | **142 min** | **Total** | **100.000** |

After mixing, the molten product was discharged and visually inspected and appeared to be a well incorporated mixture and appeared to be within the depositing viscosity range.

The chewing gum of Example 2 was then melted in an extruder and deposited in a mold as outlined in Table 4. Note that the extruder was run at cooler temperature settings for Example 2 as it was not necessary to heat the material as high as with Example 1. Accordingly the sample was deposited at a temperature 18°C cooler.

| **Table 4** | | | | | | |
|---|---|---|---|---|---|---|
| | **Processing Temperature (°C)** | | | | | **SPEED** |
| | **Extruder** | | | | **Deposit** | |
| | **Zone 1** | **Zone 2** | **Zones 3 to 7** | | **sample** | **%/RPM** |
| Example 1 | 50 | 55 | 120 | | 96 | 15%/98 |
| Example 2 | 50 | 55 | 85 | 85 | 78 | 15%/99 |

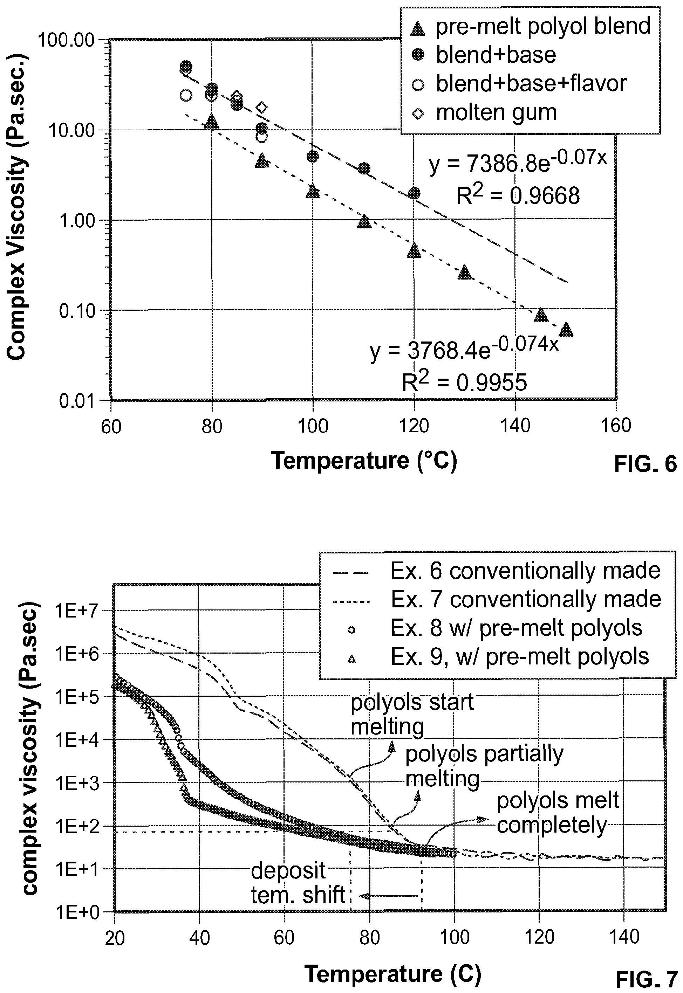

Additionally, complex viscosity of the chewing gum of Example 2 during various stages of manufacture was measured vs shear and temperature with the results shown in Figures 5 and 6. The product was tested as a sugar alcohol blend, after the base was melted into the sugar alcohol blend, after the flavor and acetylated monoglyceride was added and finally as the complete chewing gum.

### Example 3

A 2 kg. batch of melted sugar alcohol blend was prepared according to Table 5. A sigma blade mixer equipped with an oil heater was used. Several batches of this blend were made to provide enough material for Example 4.

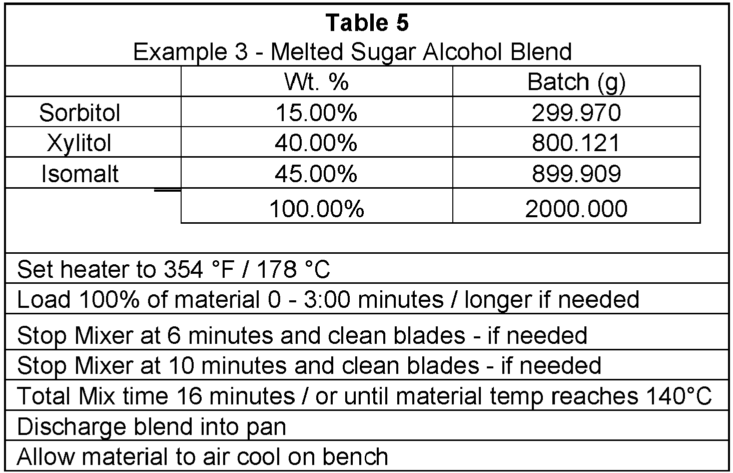

The cooled sugar alcohol blend was a pliable solid mass at room temperature.

### Example 4

The pre-melted sugar alcohol blend of Example 3 was introduced in solid form at room temperate into a sigma blade mixer at 55°C to make the chewing gum of Example 4 in a conventional gum mixing operation. The composition and process are described in Table 6.

| **Table 6** | | | | |
|---|---|---|---|---|
| **Est. Timing** | | **Ingredient** | **%** | **Grams** |
| 0-8 | | Gum Base | 29.000 | 1450 |
| | | | | |
| 8-10 | | Sugar alcohol blend of Example 3 | 13.700 | 685 |
| 9 | | | 20.000 | 1000 |
| 10 | | | 32.440 | 1622 |

| Stop Mixer and verify no sugar alcohol spots | | | | |
|---|---|---|---|---|
| 15 - 24 | | Strawberry Flavor | 2.000 | 100 |
| | | Ac. Monoglycerides | 0.800 | 40 |
| 24 | | Food acid blend | 0.800 | 40 |
| 26 | | Encapsulated High Intensity Sweeteners | 1.200 | 60 |
| | | | | |
| 26 | | Color | 0.060 | 3 |
| **36** | | **Total** | **100.000** | **5000** |

After mixing, the molten product was sheeted and pelletized like conventional gum for ease of handling in further processing. The pelletized gum was then loaded into an extruder set at 85°C to be extruded and deposited.

### Comparative Examples 5 - 7

Molten gums were made according to the prior art process by mixing the ingredients shown in Table 7 in a Sigma blade mixer at 55°C using standard (non-molten) gum making techniques. The gum base was pre-heated in an oven at 70°C and the sugar alcohols were added as crystalline powders. After mixing, the products were sheeted and formed into pellets. Later the pellets were melted in a twin screw extruder under conditions shown in Table 8 and deposited into molds.

| **Table 7** | | | | |
|---|---|---|---|---|
| | | **Ex. 5** | **Ex. 6** | **Ex. 7** |
| **mixing time (min)** | **Ingredient** | **% (wt.)** | **% (wt.)** | **% (wt.)** |
| 0-5 | Gum Base A | 29.00 | | |
| | Gum Base B | | 26.00 | |
| | Gum Base C | | | 32.00 |
| | Sorbitol | 9.92 | 22.67 | 20.35 |
| | Xylitol | 26.46 | 45.33 | 40.84 |
| | Isomalt | 29.76 | | |
| | Softeners | 0.80 | 1.00 | 0.80 |
| | Glycerin | | 1.00 | 1.00 |
| | Color | 0.06 | 0.06 | 0.06 |
| 5- 9 | Flavor | 2.00 | 2.00 | 2.00 |
| 9-14 | Food acid blend | 0.80 | 0.70 | 0.80 |
| | Free/encap. High Intensity Sweeteners | 1.20 | 1.24 | 2.15 |
| | TOTAL | 100.00 | 100.00 | 100.00 |

| **Table 8** | | | | | |
|---|---|---|---|---|---|
| | **Processing temperature (°C)** | | | | **SPEED** |
| | **Extruder** | | | **Discharge temp** | |
| | **Zone 1** | **Zone 2** | **Zones 3 to 7** | **nozzle** | **%/RPM** |
| Example 5 | 50 | 55 | 120 | 96 | 15%/98 |
| Example 6 | 50 | 55 | 93 | 77 | 15%/98 |
| Example 7 | 50 | 55 | 110 | 87 | 20%/131 |

The complex viscosity of the chewing gums of Examples 1 and 5 was measured using a viscometer with the results shown in Figure 1. As can be seen, the inventive chewing gum exhibited lower viscosity at all temperatures up to 120°C. The complex viscosity of the inventive gum of Example 1 drops below the critical 100 Pa.sec. level at about 83°C while the comparative Example 5 is still above 100 Pa.sec. at 120°C. This indicates that the inventive process allows depositing of the product at 83°C whereas the comparative process would require heating the gum past 120°C.

### Examples 8 and 9

Molten chewing gums (Examples 8 and 9) were prepared according to the present invention using the same formulas as Comparative Examples 6 and 7. In Step 1, the sugar alcohols were pre-melted together in an oven at 115°C with stirring until they were clear and free-flowing. The molten sugar alcohols were then allowed to cool to room temperature but remained as a viscous, clear liquid. Later the sugar alcohol blends were used to make the chewing gums in a sigma blade mixer at 55°C according to Table 9. The gum base was pre-heated as in Examples 5 - 7.

After mixing, the chewing gum was poured into an aluminum pan as it was too soft to sheet as in Examples 5 - 7. The composition was later melt extruded in a twin-screw extruder set to conditions shown in Table 10 and deposited in a blister formed in a packaging film.

| **Table 9** | | | |
|---|---|---|---|
| | | **Ex. 8** | **Ex. 9** |
| **Mixing time (min)** | **Ingredient** | **% (wt)** | **% (wt)** |
| 1-2 | Gum Base B | 26.00 | 32.00 |
| | Gum Base C | | |
| 2-8 Stepwise add | Pre-melt polyol blend from Step 1 | 68.00 | 61.19 |
| 8-13 | Softeners | 1.00 | 0.80 |
| | Glycerin | 1.00 | 1.00 |
| | Color | 0.06 | 0.06 |
| 13- 17 | Flavor | 2.00 | 2.00 |
| 17-23 | Food acid blend | 0.70 | 0.80 |
| | Free and Encapsulated High Intensity Sweeteners | 1.24 | 2.15 |
| | TOTAL | 100.00 | 100.00 |

| **Table 10** | | | | | |
|---|---|---|---|---|---|
| | **Processing temp (°C)** | | | | |
| | **Extruder** | | | **Discharge temp (°C)** | **Speed** |
| | Zone 1 | Zone 2 | Zone 3 to Zone 7 | nozzle | %/RPM |
| Ex. 8 | 50 | 55 | 80 | 75 | 15%/98 |
| Ex. 9 | 50 | 55 | 80 | 75 | 20%/131 |

The complex viscosity of the gums of Example 1 and 5 versus temperature was measured with the results shown in Figure 1. The complex viscosity of the gums of Examples 6, 7, 8, and 9 versus temperature was measured, with the results being shown in Figure 7.

### Examples 10 - 12

Melted sugar alcohol blends were prepared according to Table 11. A sigma blade mixer equipped with a heater was used.

| **Table 11** | | | |
|---|---|---|---|
| Melted Sugar Alcohol Blend (prepared at 140°C to ensure complete melting) | | | |
| | **Ex. 10** | **Ex. 11** | **Ex. 12** |
| **Ingredient (% wt)** | | | |
| Erythritol | 22.3 | 30 | 50 |
| Sorbitol | 77.7 | 70 | 50 |
| **Highest melting peak temperature among multiple melting peaks for the blend (°C)** | 65 | 72 | 88 |

As shown in Table 11, the erythritol to sorbitol ratios affect the melt processing temperature. A gum sample containing the melted sugar alcohol blend of Example 10 exhibited a proper complex viscosity allowing for depositing within the range of 75°C to 85°C. Additionally, Example 10 produced an initial crunch (but not a crumbly texture) that then dissipated after 5 to 10 seconds, as compared to a taffy-like texture (chewy and soft) exhibited by the gum of Example 4. Example 10 also exhibited a quicker time for stabilized crystal formation at conventional tempering conditions (22°C, 35% relative humidity) (approximately one week, compared with approximately one month for the gum of Example 4).

## Claims

1. A method of producing a chewing gum product comprising the steps of;
a. melting a blend of at least two sugar alcohols at a temperature sufficient to ensure complete melting of the sugar alcohols to form molten sugar alcohols, wherein the sugar alcohols comprise
i) a blend of sorbitol and xylitol, or
ii) a blend of erythritol and xylitol or
iii) a blend of erythritol and sorbitol in a ratio within the range of 1:2 to 1:6 of erythritol to sorbitol, or
iv) a blend of sorbitol, xylitol and isomalt, or
v) a blend of sorbitol, xylitol and erythritol, or
vi) a blend of isomalt, xylitol and erythritol, and
b. melting a gum base into the molten sugar alcohols to form a molten blend,
c. adding additional chewing gum ingredients to the molten blend, the additional chewing gum ingredients comprising at least a flavor,
d. cooling the molten blend to a lower temperature and maintaining the blend at the selected lower temperature, wherein the blend remains as a molten, pumpable mixture at the selected lower temperature, and
e. forming the molten chewing gum into a desired shape,
wherein steps c. through d. are performed in any order, and wherein the molten sugar alcohols are in completely liquid form.

2. The method of claim 1 wherein the molten sugar alcohol is cooled by the addition of solid gum base at a temperature below that of the molten sugar alcohol.

3. The method of claim 1 or 2 wherein the molten sugar alcohol comprises less than 4% water by weight, or less than 3% water by weight, or less than 2% water by weight, or less than 1% water by weight, or wherein the molten sugar alcohol comprises less than 0.5% water by weight.

4. The method of any preceding claim wherein the gum base is melted into the molten sugar alcohol at a temperature between 70°C and 110°C.

5. The method of any preceding claim wherein the additional chewing gum ingredients comprising at least a flavor are added after the molten sugar alcohol has been cooled

6. The method of any preceding claim wherein the sugar alcohols comprise:
A) a blend of two sugar alcohols, or
B) a blend of three sugar alcohols, or
C) four or more sugar alcohols.

7. The method of any preceding claim wherein the at least two sugar alcohols are heated to a temperature of at least 70°C, or at least 80 °C, or at least 90 °C, or at least 100 °C, or at least 110 °C, or at least 120 °C, or at least 130 °C, or at least 140 °C, or at least 150 °C, or at least 160 °C, or wherein the at least two sugar alcohols are heated to a temperature of at least 190°C.

8. The method of any preceding claim wherein the molten blend is deposited at a temperature less than 120°C, or less than 95°C, or less than 90°C, or less than 85°C, or less than 80°C, or less than 75°C, or wherein the molten blend is deposited at a temperature less than 70°C.

9. The method of any preceding claim wherein the additional chewing gum ingredients comprise flavor and at least one ingredient selected from the group consisting of physiological cooling agents, warming agents, tingling agents, encapsulated and unencapsulated high intensity sweeteners, humectants, softeners, colors, acidulants, fillers, emulsifiers, water soluble softening agents, binders, nutritional supplements and visual effects.

10. The method of producing a chewing gum product according to claim 5, the method comprising the steps of;
a. melting at least two sugar alcohols at a temperature sufficient to ensure complete melting, wherein the sugar alcohols comprise
i) a blend of sorbitol and xylitol, or
ii) a blend of erythritol and xylitol or
iii) a blend of erythritol and sorbitol in a ratio within the range of 1:2 to 1:6 of erythritol to sorbitol, or
iv) a blend of sorbitol, xylitol and isomalt, or
v) a blend of sorbitol, xylitol and erythritol, or
vi) a blend of isomalt, xylitol and erythritol.
b. cooling the melted at least two sugar alcohols,
c. mixing a gum base and additional chewing gum ingredients comprising at least a flavor with the at least two sugar alcohols to form a mixture,
d. heating the mixture to form a molten chewing gum composition at a temperature whereat the molten chewing gum composition is pumpable and depositable, and
e. forming a chewing gum product by depositing the molten chewing gum composition onto a surface, for example, into a mold to make a molded chewing gum piece.

## Patentansprüche

1. Verfahren zur Herstellung eines Kaugummiprodukts, umfassend die Schritte:
a. Schmelzen eines Gemischs von wenigstens zwei Zuckeralkoholen bei einer Temperatur, die ausreicht, vollständiges Schmelzen der Zuckeralkohole zu gewährleisten, um geschmolzene Zuckeralkohole zu bilden, wobei die Zuckeralkohole umfassen
i) ein Gemisch von Sorbit und Xylit, oder
ii) ein Gemisch von Erythrit und Xylit, oder
iii) ein Gemisch von Erythrit und Sorbit in einem Verhältnis in dem Bereich von 1:2 bis 1:6 von Erythrit zu Sorbit, oder
iv) ein Gemisch von Sorbit, Xylit und Isomalt, oder
v) ein Gemisch von Sorbit, Xylit und Erythrit, oder
vi) ein Gemisch von Isomalt, Xylit und Erythrit, und
b. Schmelzen einer Gummigrundmasse in die geschmolzenen Zuckeralkohole, um ein geschmolzenes Gemisch zu bilden,
c. Zugeben zusätzlicher Kaugummibestandteile zu dem geschmolzenen Gemisch, wobei die zusätzlichen Kaugummibestandteile wenigstens ein Aroma umfassen,
d. Abkühlen des geschmolzenen Gemischs auf eine niedrigere Temperatur und Halten des Gemischs auf der ausgewählten niedrigeren Temperatur, wobei das Gemisch als ein geschmolzenes pumpbares Gemisch bei der ausgewählten niedrigeren Temperatur bleibt, und
e. Formen des geschmolzenen Kaugummis zu einer gewünschten Form,
wobei die Schritte c. bis d. in beliebiger Reihenfolge durchgeführt werden und wobei die geschmolzenen Zuckeralkohole in vollständig flüssiger Form vorliegen.

2. Verfahren nach Anspruch 1, wobei der geschmolzene Zuckeralkohol durch Zugeben von fester Gummigrundmasse bei einer Temperatur unterhalb jener des geschmolzenen Zuckeralkohols abgekühlt wird.

3. Verfahren nach Anspruch 1 oder 2, wobei der geschmolzene Zuckeralkohol weniger als 4 Gew.-% Wasser oder weniger als 3 Gew.-% Wasser oder weniger als 2 Gew.-% Wasser oder weniger als 1 Gew.-% Wasser umfasst, oder wobei der geschmolzene Zuckeralkohol weniger als 0,5 Gew.-% Wasser umfasst.

4. Verfahren nach einem der vorstehenden Ansprüche, wobei die Gummigrundmasse bei einer Temperatur zwischen 70 °C und 110 °C in den geschmolzenen Zuckeralkohol eingeschmolzen wird.

5. Verfahren nach einem der vorstehenden Ansprüche, wobei die zusätzlichen Kaugummibestandteile, die wenigstens ein Aroma umfassen, zugegeben werden, nachdem der geschmolzene Zuckeralkohol abgekühlt worden ist.

6. Verfahren nach einem der vorstehenden Ansprüche, wobei die Zuckeralkohole umfassen:
A) ein Gemisch von zwei Zuckeralkoholen, oder
B) ein Gemisch von drei Zuckeralkoholen, oder
C) vier oder mehr Zuckeralkohole.

7. Verfahren nach einem der vorstehenden Ansprüche, wobei die wenigstens zwei Zuckeralkohole auf eine Temperatur von wenigstens 70 °C oder wenigstens 80 °C oder wenigstens 90 °C oder wenigstens 100 °C oder wenigstens 110 °C oder wenigstens 120 °C oder wenigstens 130 °C oder wenigstens 140 °C oder wenigstens 150 °C oder wenigstens 160 °C erhitzt werden oder wobei die wenigstens zwei Zuckeralkohole auf eine Temperatur von wenigstens 190 °C erhitzt werden.

8. Verfahren nach einem der vorstehenden Ansprüche, wobei das geschmolzene Gemisch bei einer Temperatur von weniger als 120 °C oder weniger als 95 °C oder weniger als 90 °C oder weniger als 85 °C oder weniger als 80 °C oder weniger als 75 °C abgeschieden wird oder wobei das geschmolzene Gemisch bei einer Temperatur von weniger als 70 °C abgeschieden wird.

9. Verfahren nach einem der vorstehenden Ansprüche, wobei die zusätzlichen Kaugummibestandteile Aroma und wenigstens einen Bestandteil ausgewählt aus der Gruppe bestehend aus physiologischen Kühlmitteln, Wärmemitteln, prickelnden Mitteln, verkapselten und nicht verkapselten Süßstoffen hoher Intensität, Feuchthaltemitteln, Weichmachern, Farbstoffen, Säuerungsmitteln, Füllstoffen, Emulgatoren, wasserlöslichen Weichmachern, Bindemitteln, Nahrungsergänzungsmitteln und visuellen Effekten umfassen.

10. Verfahren zur Herstellung eines Kaugummiprodukts nach Anspruch 5, wobei das Verfahren die Schritte umfasst:
a. Schmelzen von wenigstens zwei Zuckeralkoholen bei einer Temperatur, die ausreicht, vollständiges Schmelzen zu gewährleisten, wobei die Zuckeralkohole umfassen
i) ein Gemisch von Sorbit und Xylit, oder
ii) ein Gemisch von Erythrit und Xylit, oder
iii) ein Gemisch von Erythrit und Sorbit in einem Verhältnis in dem Bereich von 1:2 bis 1:6 von Erythrit zu Sorbit, oder
iv) ein Gemisch von Sorbit, Xylit und Isomalt, oder
v) ein Gemisch von Sorbit, Xylit und Erythrit, oder
vi) ein Gemisch von Isomalt, Xylit und Erythrit,
b. Kühlen der geschmolzenen wenigstens zwei Zuckeralkohole,
c. Mischen einer Gummigrundmasse und zusätzlicher Kaugummibestandteile, die wenigstens ein Aroma umfassen, mit den wenigstens zwei Zuckeralkoholen, um ein Gemisch zu bilden,
d. Erhitzen des Gemischs, um eine geschmolzene Kaugummizusammensetzung bei einer Temperatur zu bilden, bei der die geschmolzene Kaugummizusammensetzung pumpbar und abscheidbar ist, und
e. Formen eines Kaugummiprodukts durch Aufbringen der geschmolzenen Kaugummizusammensetzung auf eine Oberfläche, beispielsweise in ein Formwerkzeug, um ein geformtes Kaugummistück herzustellen.

## Revendications

1. Procédé de production d'un produit de chewing-gum comprenant les étapes de ;
a. fusion d'un mélange d'au moins deux alcools de sucre à une température suffisante pour assurer la fusion complète des alcools de sucre pour former des alcools de sucre fondus, dans laquelle les alcools de sucre comprennent
i) un mélange de sorbitol et de xylitol, ou
ii) un mélange d'érythritol et de xylitol ou
iii) un mélange d'érythritol et de sorbitol en un rapport dans la plage de 1:2 à 1:6 d'érythritol sur sorbitol, ou
iv) un mélange de sorbitol, de xylitol et d'isomalt, ou
v) un mélange de sorbitol, de xylitol et d'érythritol, ou
vi) un mélange d'isomalt, de xylitol et d'érythritol, et
b. fusion d'une base de gomme dans les alcools de sucre fondus pour former un mélange fondu,
c. ajout d'ingrédients supplémentaires de chewing-gum au mélange fondu, les ingrédients supplémentaires de chewing-gum comprenant au moins un arôme,
d. refroidissement du mélange fondu jusqu'à une température plus basse et maintien du mélange à la température plus basse choisie, le mélange restant sous forme d'un mélange fondu pompable à la température plus basse choisie, et
e. mise en forme du chewing-gum fondu en une forme souhaitée,
dans lequel les étapes c. à d. sont réalisées dans un ordre quelconque, et dans lequel les alcools de sucre fondus sont sous forme complètement liquide.

2. Procédé selon la revendication 1, dans lequel l'alcool de sucre fondu est refroidi par ajout d'une base de gomme solide à une température inférieure à celle de l'alcool de sucre fondu.

3. Procédé selon la revendication 1 ou 2, dans lequel l'alcool de sucre fondu comprend moins de 4 % d'eau en poids, ou moins de 3 % d'eau en poids, ou moins de 2 % d'eau en poids, ou moins de 1 % d'eau en poids, ou dans lequel l'alcool de sucre fondu comprend moins de 0,5 % d'eau en poids.

4. Procédé selon l'une quelconque des revendications précédentes, dans lequel la base de gomme est fondue dans l'alcool de sucre fondu à une température comprise entre 70 °C et 110 °C.

5. Procédé selon l'une quelconque des revendications précédentes, dans lequel les ingrédients supplémentaires de chewing-gum comprenant au moins un arôme sont ajoutés après refroidissement de l'alcool de sucre fondu

6. Procédé selon l'une quelconque des revendications précédentes, dans lequel les alcools de sucre comprennent :
A) un mélange de deux alcools de sucre, ou
B) un mélange de trois alcools de sucre, ou
C) quatre alcools de sucre ou plus.

7. Procédé selon l'une quelconque des revendications précédentes, dans lequel les au moins deux alcools de sucre sont chauffés jusqu'à une température d'au moins 70 °C, ou d'au moins 80 °C, ou d'au moins 90 °C, ou d'au moins 100 °C, ou d'au moins 110 °C, ou d'au moins 120 °C, ou d'au moins 130 °C, ou d'au moins 140 °C, ou d'au moins 150 °C, ou d'au moins 160 °C, ou dans lequel les au moins deux alcools de sucre sont chauffés jusqu'à une température d'au moins 190 °C.

8. Procédé selon l'une quelconque des revendications précédentes, dans lequel le mélange fondu est déposé à une température inférieure à 120 °C, ou inférieure à 95 °C, ou inférieure à 90 °C, ou inférieure à 85 °C, ou inférieure à 80 °C, ou inférieure à 75 °C, ou dans lequel le mélange fondu est déposé à une température inférieure à 70 °C.

9. Procédé selon l'une quelconque des revendications précédentes, dans lequel les ingrédients supplémentaires de chewing-gum comprennent un arôme et au moins un ingrédient choisi dans le groupe constitué par les agents de refroidissement physiologiques, les agents de réchauffement, les agents de fourmillement, les édulcorants de haute intensité encapsulés et non encapsulés, les humectants, les adoucissants, les matières colorantes, les acidulants, les charges, les émulsifiants, les agents assouplissants solubles dans l'eau, les liants, les suppléments nutritionnels et les effets visuels.

10. Procédé de production d'un produit de chewing-gum selon la revendication 5, le procédé comprenant les étapes de :
a. fusion d'au moins deux alcools de sucre à une température suffisante pour assurer une fusion complète, dans laquelle les alcools de sucre comprennent
i) un mélange de sorbitol et de xylitol, ou
ii) un mélange d'érythritol et de xylitol ou
iii) un mélange d'érythritol et de sorbitol en un rapport dans la plage de 1:2 à 1:6 d'érythritol sur sorbitol, ou
iv) un mélange de sorbitol, de xylitol et d'isomalt, ou
v) un mélange de sorbitol, de xylitol et d'érythritol, ou
vi) un mélange d'isomalt, de xylitol et d'érythritol.
b. refroidissement des au moins deux alcools de sucres fondus,
c. mélange d'une base de gomme et d'ingrédients supplémentaires de chewing-gum comprenant au moins un arôme avec les au moins deux alcools de sucre pour former un mélange,
d. chauffage du mélange pour former une composition de chewing-gum fondue à une température à laquelle la composition de chewing-gum fondue est pompable et déposable, et
e. formation d'un produit de chewing-gum par dépôt de la composition de chewing-gum fondue sur une surface, par exemple dans un moule, pour faire un morceau moulé de chewing-gum.
